# FASCICULE DE BREVET EUROPEEN

(11) **EP 3 903 441 B1**
(45) Date de publication et mention de la délivrance du brevet: **25.01.2023**
(21) Numéro de dépôt: 19829189.0
(22) Date de dépôt: 19.12.2019
(51) Int. Cl.: H04L 9/08

(54) **PROCEDE ET DISPOSITIF DE CALCUL QUANTIQUE DELEGUE A UN SERVEUR QUANTIQUE PAR UN CLIENT POUR LA CREATION D'UN ETAT QUANTIQUE CONNU DU CLIENT MAIS DISSIMULE AU SERVEUR QUANTIQUE**
VERFAHREN UND VORRICHTUNG ZUR AN EINEN QUANTENSERVER DELEGIERTEN QUANTENBERECHNUNG VON EINEM CLIENT ZUR ERZEUGUNG EINES QUANTENZUSTANDS, DER DEM CLIENT BEKANNT IST, ABER VOM QUANTENSERVER VERBORGEN IST
METHOD AND DEVICE FOR QUANTUM COMPUTATION DELEGATED TO A QUANTUM SERVER BY A CLIENT FOR THE CREATION OF A QUANTUM STATE KNOWN TO THE CLIENT BUT CONCEALED FROM THE QUANTUM SERVER

(30) Priorité: 26.12.2018 FR 1874163
(43) Date de publication de la demande: 03.11.2021
(73) Titulaire: VeriQloud, 92120 Montrouge (FR)
(72) Inventeur: KAPLAN, Marc, 92120 Montrouge (FR)
(74) Mandataire: Novagraaf Technologies
(86) Numéro de dépôt international: PCT/EP2019/086485
(87) Numéro de publication internationale: WO 2020/136097

(56) Documents cités:
- CN-A- 108 388 946
- XIAOQIAN ZHANG ET AL: "Measurement-based universal blind quantum computation with minor resources", ARXIV.ORG, CORNELL UNIVERSITY LIBRARY, 201 OLIN LIBRARY CORNELL UNIVERSITY ITHACA, NY 14853, 10 janvier 2018 (2018-01-10), XP081074121,
- JULIUS WALLN\"OFER ET AL: "Multipartite state generation in quantum networks with optimal scaling", ARXIV.ORG, CORNELL UNIVERSITY LIBRARY, 201 OLIN LIBRARY CORNELL UNIVERSITY ITHACA, NY 14853, 29 juin 2018 (2018-06-29), XP080896147,
- TOMOYUKI MORIMAE AND KEISUKE FUJII: "Secure Entanglement Distillation for Double-Server Blind Quantum Computation", PHYSICAL REVIEW LETTERS, AMERICAN PHYSICAL SOCIETY, US, vol. 111, no. 2, 9 juillet 2013 (2013-07-09), pages 20502-1, XP002751535, ISSN: 0031-9007, DOI: 10.1103/PHYSREVLETT.111.020502

## Description

La présente invention concerne de manière générale un procédé de calcul quantique implémenté par l'association d'un dispositif client avec un dispositif serveur quantique et utilisant une architecture simplifiée.

Les calculateurs quantiques sont des dispositifs utilisant les propriétés quantiques de la matière pour effectuer des opérations sur des données, ou informations quantiques. L'unité d'information quantique est appelée « qubit » ou bit quantique. Des communications entre différents calculateurs, optiques ou nonoptiques, sont possibles, par transmission de photons ou de signaux électromagnétiques qui encodent les informations quantiques.

En pratique, la réalisation du codage d'un bit quantique peut être effectuée en utilisant des ions piégés soumis à un champ électromagnétique bien défini, diamants dopés, ou bits quantiques supraconducteurs. Le codage du bit quantique se fait par le contrôle d'une transition entre deux niveaux d'énergie des particules, par exemple entre l'état fondamental et un état excité avec une transition optique (par interaction avec un faisceau laser par exemple), émettant ou recevant un photon de longueur d'onde caractéristique de la transition énergétique contrôlée.

Il est connu par l'homme de l'art qu'il est possible de déléguer un calcul à un dispositif serveur quantique par un dispositif client de manière sécurisée. Cette tâche est appelée en anglais « Blind quantum computing ». La première réalisation pratique d'un tel calcul a été proposée par Broadbent et al. dans « Universal blind quantum computation », Proceedings of the 50th Annual IEEE Symposium on Foundations of Computer Science (FOCS 2009), pp. 517-526. Dans leur protocole, le dispositif client prépare et envoie au dispositif serveur des qubits uniques choisis au hasard (encodés sur des photons), sur lequel le dispositif serveur effectue une série d'opérations commandées par le dispositif client, en fonction des résultats de mesures obtenues à chaque étape. La clé du protocole réside dans le fait que les photons ne sont pas parfaitement distinguables, et que le dispositif serveur réalise un calcul sous forme d'une série de mesures sans connaître les états sur lesquels les mesures sont effectuées.

Il est par ailleurs connu de pouvoir créer de l'intrication quantique entre 2 systèmes par l'utilisation de dispositifs d'optique linéaire tels qu'un séparateur de faisceau, comme illustré par exemple dans « Bell's-inequality experiments using independent-particle sources », Bernard Yurke and David Stoler, Phys. Rev. A 46, 2229 (1992). L'intrication quantique est le phénomène par lequel 2 systèmes distincts forment un système lié et présentent des états quantiques dépendant l'un de l'autre quelle que soit la distance qui les sépare. Les publications de X. Zhang et al: "Measurement-based universal blind quantum computation with minor resources", et de T. Morimae et K. Fujii: "Secure Entanglement Distillation for Double-Server Blind Quantum Computation", ainsi que la demande de brevet CN 108 388 946 A, exposent la délégation depuis un client vers un serveur d'une computation sur des états quantiques, sans que le serveur puisse venir à connaissance du résultat chez le client ("blind quantum computation").

La publication de J. Walnofer et al: "Multipartite state génération in quantum networks with optimal scaling" expose la génération (et propagation) d'un ensemble d'états quantiques à travers d'un réseau à longue distance grâce à un ou plusieurs répétiteurs quantiques.

Le problème technique que se propose de résoudre le demandeur est similaire à la délégation de calcul à un serveur quantique et consiste en la délégation par un client de la création d'un état quantique inconnu à un serveur quantique.

Afin de résoudre ce problème, le demandeur a mis au point un procédé de génération sécurisée d'un état quantique Ef par un serveur quantique S délégué par un client C, le procédé de génération étant caractérisé en ce qu'il comprend les étapes suivantes :a/ préparer, par le serveur quantique S, dans un état quantique initial E0 des données codées dans un degré de liberté d1 ou d2 de photons émis par une paire de bits quantiques, où le degré de liberté d1, respectivement d2, de chaque photon émis est intriqué avec le bit quantique émettant le photon ;b/ envoyer, par le serveur quantique, au client C les photons issus de la paire de bits quantiques dans l'état quantique initial E0 ;c/ activer ou non, par le client C, une interaction entre les photons émis par la paire de bits quantiques initiale pour générer un nouvel état quantique Ec ;d/ masquer ou non, par le client C, les données temporelles de ladite activation ou non-activation et de ladite interaction ou non-interaction entre les photons émis par la paire de bits quantiques de sorte que lesdites activation ou non-activation et interaction ou non-interaction restent privées ;e/ mesurer les degrés de liberté d1 et d2 des photons dans l'état quantique Ec généré à l'étape c/ ;f/ obtenir suite à l'étape e/ un état quantique final Ef des bits quantiques.

Il est à noter que la description présentée ici considère un système à deux bits quantiques, mais que, plus généralement, une séquence de plusieurs paires de bits quantiques peut être considérée.

Des caractéristiques ou des modes de réalisation particuliers, utilisables seuls ou en combinaison si possible, sont :
- l'interaction entre les photons émis par la paire de bits quantiques consiste en une interférence à deux photons se produisant à l'entrée d'un séparateur de faisceau BS ;
- le masquage des données temporelles de ladite activation et de ladite interaction entre les photons émis par la paire de bits quantiques est réalisé par l'introduction aux étapes c/ et d/ de délais, choisis par le client C, entre les chemins suivis par chacun des photons issus de la paire de bits quantiques dans l'état quantique initial E0 ;- l'étape e/ du procédé de génération sécurisée d'un état quantique Ef peut être effectuée soit par le serveur quantique S, soit par le client C.

Dans le cas où l'étape e/ du procédé de génération sécurisée d'un état quantique Ef est effectuée par le serveur quantique S, le procédé de génération sécurisée d'un état quantique Ef est caractérisé par les éléments ci-dessous :
- le masquage de l'étape d/ est réalisé - une étape intermédiaire d'/ entre les étapes d/ et e/ est réalisée, ladite étape d'/ consistant à envoyer par le client C les photons dans l'état quantique Ec généré à l'étape c/ au serveur quantique S ;
- l'étape e/ de mesure des degrés de liberté d1 et d2 des photons dans l'état quantique Ec est réalisée par le serveur quantique S ;
- une étape supplémentaire g/ est réalisée, ladite étape g/ consistant à envoyer par le serveur S le résultat de la mesure effectuée à l'étape e/.

Dans ce cas, la demande a également pour objet un dispositif pour la mise en oeuvre du procédé de génération sécurisée d'un état quantique Ef, dans lequel :
- le serveur quantique S comprend :
   i. un générateur de bits quantiques solides émettant des photons via l'application d'un champ électromagnétique,
   ii. deux premier et deuxième détecteurs de photons uniques DDau, DDbu, destinés à délivrer des premiers signaux de mesure Dau, Dbu, et deux troisième et quatrième détecteurs de photons uniques DDad, DDbd, destinés à délivrer des seconds signaux de mesure Dad, Dbd;
- le client C comprend :
   i. un séparateur de faisceau BS étant destiné à recevoir deux photons émis par la paire de bits quantiques dans l'état quantique E0,
   ii. des premier et deuxième délais D1 et D2 de type ligne à retard placés en entrée de chacune des faces d'entrée du séparateur de faisceau BS activables par le client C et destinés à introduire un délai temporel sur le faisceau les traversant,
   iii. des premier et second moyens Mu et Md de séparation spatiale de photons à degrés de liberté da et db différents placés respectivement en sortie de chacune des directions de réflexion et transmission du séparateur de faisceau BS,
   iv. des troisième et quatrième délais D3 et D4 de type ligne à retard placés en sortie de chacune des faces de sortie du premier moyen Mu de séparation spatiale de photons à degré de liberté da et db différents, activables par le client C et destinés à introduire un délai temporel sur le faisceau les traversant,
   v. des cinquième et sixième délais D5 et D6 de type ligne à retard placés en sortie de chacune des faces de sortie du second moyen Md de séparation spatiale de photons à degré de liberté da et db différents, activables par le client C et destinés à introduire un délai temporel sur le faisceau les traversant, de telle sorte que le séparateur de faisceau BS du client C soit placé en sortie du générateur de bits quantiques solides du serveur quantique S et que les troisième, quatrième, cinquième et sixième délais, D3, D4, D5 et D6 du client C soient respectivement placés en entrée des premier et deuxième détecteurs de photons Ddau, DDbu et des troisième et quatrième détecteurs de photons DDbd, DDad du serveur quantique S.

Plus précisément, les premier et deuxième détecteurs de photons DDau, DDbu détectent des photons de degré de liberté Da (par exemple polarisation horizontale si le degré de liberté est la polarisation du photon) et Db (par exemple polarisation verticale si le degré de liberté est la polarisation du photon) respectivement, et les troisième et quatrième détecteurs de photons DDbd, DDad détectent des photons de degré de liberté Db et Da respectivement.

Dans le cas où l'étape e/ du procédé de génération sécurisée d'un état quantique Ef est effectuée par le client C, le procédé de génération sécurisée d'un état quantique Ef est caractérisé par les éléments ci-dessous :
- le masquage de l'étape d/ n'est pas réalisé ;
- l'étape e/ de mesure des degrés de liberté d1 et d2 des photons dans l'état quantique Ec est réalisée par le client (C) ;
- l'étape f/ est produite suite à la mesure des degrés de liberté d1 et d2 des photons dans l'état quantique Ec du fait de l'intrication entre les degrés de liberté d1 et d2 des photons et les bits quantiques du serveur quantique S les émettant, ladite intrication induisant un nouvel état quantique Ef des bits quantiques.

Dans ce cas, la demande a également pour objet un dispositif pour la mise en oeuvre du procédé de génération sécurisée d'un état quantique Ef, dans lequel le serveur quantique S comprend un générateur de bits quantiques solides émettant ou couplés avec des photons via l'application d'un champ électromagnétique, et le client C comprend :
i. un séparateur de faisceau BS étant destiné à recevoir deux photons émis par la paire de bits quantiques dans l'état quantique E0,
ii. des premier et deuxième délais D1 et D2 de type ligne à retard placés en entrée de chacune des faces d'entrée du séparateur de faisceau BS activables par le client C et destinés à introduire un délai temporel sur le faisceau les traversant,
iii. des premier et second moyens Mu et Md de séparation spatiale de photons à degrés de liberté da et db différents placés respectivement en sortie de chacune des directions de réflexion et transmission du séparateur de faisceau BS,
iv. des troisième et quatrième délais D3 et D4 de type ligne à retard placés en sortie de chacune des faces de sortie du premier moyen Mu de séparation spatiale de photons à degré de liberté da et db différents, préférentiellement mis à zéro par le client C,
v. des cinquième et sixième délais D5 et D6 de type ligne à retard placés en sortie de chacune des faces de sortie du second moyen Md de séparation spatiale de photons à degré de liberté da et db différents, préférentiellement mis à zéro par le client C,
vi. deux premier et deuxième détecteurs de photons uniques DDau, DDbu, destinés à délivrer des premiers signaux de mesure Dau, Dbu, et deux troisième et quatrième détecteurs de photons uniques DDad, DDbd, destinés à délivrer des seconds signaux de mesure Dad, Dbd, de telle sorte que le séparateur de faisceau BS du client C soit placé en sortie du générateur de bits quantiques solides du serveur quantique S et que les troisième, quatrième, cinquième et sixième délais, D3, D4, D5 et D6 du client C soient respectivement placés en entrée des premier et deuxième détecteurs de photons DDau, DDbu et des troisième et quatrième détecteurs de photons DDbd, DDad du client C.

En pratique, la réalisation du codage d'un bit quantique peut être effectuée en utilisant des ions piégés, diamants dopés, ou bits quantiques supraconducteurs soumis à un champ électromagnétique bien défini.

Dans le cas de bits quantiques supraconducteurs, expérimentalement, un dispositif permettant de transformer la fréquence du champs magnétique des micro-ondes vers le domaine optique peut venir s'intercaler entre le client et le serveur, comme décrit dans la référence Physical Review A.96.013833 « Microwave-to-optical frequency conversion using a cesium atom coupled to a superconducting resonator », B. T. Gard, K. Jacobs, R. McDermott, et M. Saffman.

De même que précédemment, les premier et deuxième détecteurs de photons Ddau, DDbu détectent des photons de degré de liberté Da et Db respectivement, et les troisième et quatrième détecteurs de photons DDbd, DDad détectent des photons de degré de liberté Db et Da respectivement.

De manière générale, un avantage de la solution proposée dans la présente demande est que le bit quantique solide n'a jamais besoin d'absorber de photon. La tâche réalisée par le bit quantique solide réside dans l'émission d'un photon intriqué avec son état, mais aucune valeur n'est transmise par le client ni stockée dans la mémoire quantique du serveur.

Un autre avantage de la solution proposée dans la présente demande réside dans le fait que le serveur ne réalise plus d'opération sur deux bits quantiques, en effet toutes les opérations sur deux bits quantiques sont réalisées par le client.

Par ailleurs, lorsque le client C et le serveur quantique S sont proches spatialement l'un de l'autre, le client C peut être inclus dans un boîtier scellé.

D'autres avantages et particularités de la présente invention résulteront de la description qui va suivre, donnée à titre d'exemple non limitatif et faite en référence aux figures annexées :
[Fig. 1] illustre de manière schématique les différentes étapes d'un premier mode de réalisation d'un procédé de génération sécurisée d'un état quantique Ef par un serveur quantique S délégué par un client C ;
[Fig. 2] illustre de manière schématique les différentes étapes du procédé de génération sécurisée d'un état quantique Ef selon une première variante du premier mode de réalisation illustré à la figure 1 ;
[Fig. 3] illustre de manière schématique les différentes étapes du procédé de génération sécurisée d'un état quantique Ef selon une deuxième variante du premier mode de réalisation illustré à la figure 1 ;
[Fig. 4] illustre un séparateur de faisceau, sur lequel deux photons sont incidents, et pour lequel on active (gauche) ou non (droite) un délai D le long d'une des faces d'entrée ;
[Fig. 5a] illustre de manière schématique une premier moyen Mu ou Md de séparation spatiale de 2 degrés de liberté différents Da et Db pour un photon, lorsque le degré de liberté choisi est la fréquence du photon ;
[Fig. 5b] illustre de manière schématique une premier moyen Mu ou Md de séparation spatiale de 2 degrés de liberté différents Da et Db pour un photon, lorsque le degré de liberté choisi est la polarisation du photon ;
[Fig. 5c] illustre de manière schématique une premier moyen Mu ou Md de séparation spatiale de 2 degrés de liberté différents Da et Db pour un photon, lorsque le degré de liberté choisi est la phase du photon ;
[Fig. 5d] illustre de manière schématique une premier moyen Mu ou Md de séparation spatiale de 2 degrés de liberté différents Da et Db pour un photon, lorsque le degré de liberté choisi est la différence de phase du photon ;
[Fig. 5e] illustre de manière schématique une premier moyen Mu ou Md de séparation spatiale de 2 degrés de liberté différents Da et Db pour un photon, lorsque le degré de liberté choisi est la localisation temporelle du photon ;
[Fig. 6] représente un dispositif générique de réalisation du procédé de génération sécurisée d'un état quantique Ef par un serveur quantique S délégué par un client C, comprenant deux délais d'activation de l'interaction entre deux photons émis par deux bits quantiques, deux moyens de séparation spatiale de degrés de libertés Da et Db différents, plusieurs délais configurés pour masquer ou non l'activation ou la non-activation d'une interaction entre deux photons incidents sur le séparateur de faisceau, et plusieurs détecteurs de photons uniques.

### DESCRIPTION DETAILLEE

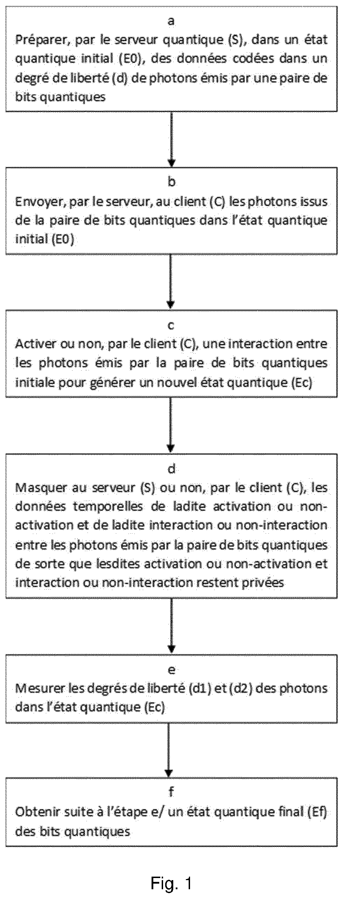

La figure 1 illustre de manière schématique les différentes étapes d'un premier mode de réalisation d'un procédé de génération sécurisée d'un état quantique Ef par un serveur quantique S délégué par un client C, comprenant les étapes suivantes :
a/ préparer, par le serveur quantique S, dans un état quantique initial E0 des données codées dans un degré de liberté d1 ou d2 de photons émis par une paire de bits quantiques, où le degré de liberté d1, respectivement d2, de chaque photon émis est intriqué avec le bit quantique émettant le photon ;
b/ envoyer, par le serveur quantique, au client C les photons issus de la paire de bits quantiques dans l'état quantique initial E0 ;
c/ activer ou non, par le client C, une interaction entre les photons émis par la paire de bits quantiques initiale pour générer un nouvel état quantique Ec ;
d/ masquer ou non, par le client C, les données temporelles de ladite activation ou non-activation et de ladite interaction ou non-interaction entre les photons émis par la paire de bits quantiques de sorte que lesdites activation ou non-activation et interaction ou non-interaction restent privées ;
e/ mesurer les degrés de liberté d1 et d2 des photons dans l'état quantique Ec généré à l'étape c/ ;
f/ obtenir suite à l'étape e/ un état quantique final Ef des bits quantiques.

Expérimentalement, les bits quantiques peuvent être des bits quantiques solides réalisés à l'aide d'ions piégés, de diamants dopés ou de bits quantiques supraconducteurs émettant ou couplés avec des photons via l'application d'un champ électromagnétique.

Par degré de liberté de photons, on entend une propriété physique décrite par la mécanique quantique et utilisable pour des communications quantiques, et telle que la phase, la différence de phase, la localisation temporelle, la polarisation ou la fréquence des photons.

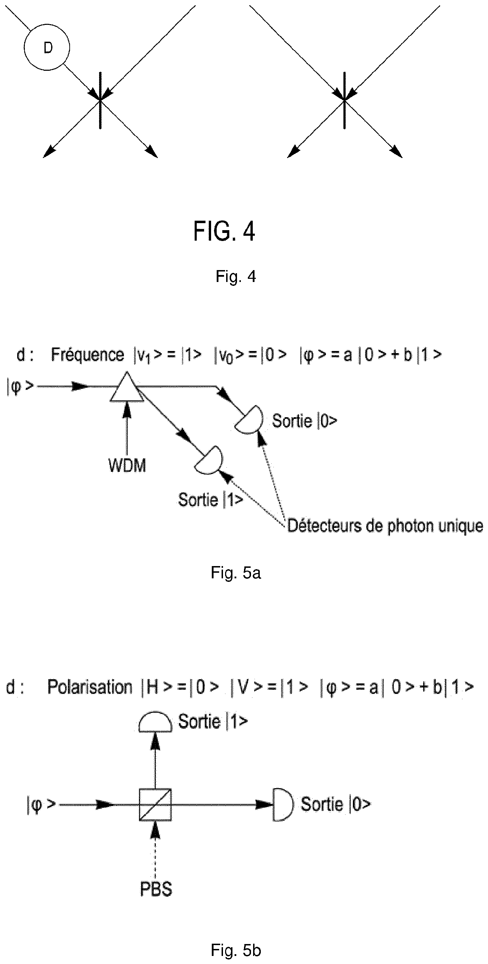

Dans un mode de réalisation privilégié, l'interaction entre les photons émis par la paire de bits quantiques consiste en une interférence à deux photons se produisant à l'entrée d'un séparateur de faisceau BS. La figure 4 illustre cette interaction.

Dans un mode de réalisation privilégié également, le masquage des données temporelles de ladite activation et de ladite interaction entre les photons émis par la paire de bits quantiques est réalisé par l'introduction aux étapes c/ et d/ de délais, choisis par le client C, entre les chemins suivis par chacun des photons issus de la paire de bits quantiques dans l'état quantique initial E0. Ainsi, il n'est pas possible de savoir si les deux photons ont interagi, ceux-ci étant décalés dans le temps. En pratique, ces délais peuvent être réalisés en utilisant des lignes à retard, telles que des fibres optiques.

L'étape e/ du procédé de génération sécurisée d'un état quantique Ef peut être effectuée soit par le serveur quantique S, soit par le client C. L'objectif recherché dans la présente demande consiste en la création d'un état quantique connu du client mais inconnu du serveur quantique S. Ainsi se dessinent au moins deux variantes du premier mode de réalisation, selon que l'étape e/ est effectuée par le serveur quantique S ou par le client C.

Selon une variante du premier mode de réalisation illustré à la figure 1, le procédé de génération sécurisée d'un état quantique Ef est caractérisé par les éléments ci-dessous :
o le masquage de l'étape d/ est réalisé ;
o une étape intermédiaire d'/ entre les étapes d/ et e/ est réalisée, ladite étape d'/ consistant à envoyer par le client C les photons dans l'état quantique Ec généré à l'étape c/ au serveur quantique S ;
o l'étape e/ de mesure des degrés de liberté d1 et d2 des photons dans l'état quantique Ec est réalisée par le serveur quantique S;
o une étape supplémentaire g/ est réalisée, ladite étape g/ consistant à envoyer par le serveur S le résultat de la mesure effectuée à l'étape e/ au client C.

Ainsi, la demande a également pour objet un dispositif pour la mise en oeuvre du procédé de génération sécurisée d'un état quantique Ef, dans lequel :
o le serveur quantique S comprend :
   i. un générateur de bits quantiques solides émettant des photons via l'application d'un champ électromagnétique,
   ii. deux premier et deuxième détecteurs de photons uniques DDau, DDbu, destinés à délivrer des premiers signaux de mesure Dau, Dbu, et deux troisième et quatrième détecteurs de photons uniques DDad, DDbd, destinés à délivrer des seconds signaux de mesure Dad, Dbd ;
o le client C comprend :
   i. un séparateur de faisceau BS étant destiné à recevoir deux photons émis par la paire de bits quantiques dans l'état quantique E0,
   ii. des premier et deuxième délais D1 et D2 de type ligne à retard placés en entrée de chacune des faces d'entrée du séparateur de faisceau BS activables par le client C et destinés à introduire un délai temporel sur le faisceau les traversant,
   iii. des premier et second moyens Mu et Md de séparation spatiale de photons à degrés de liberté da et db différents placés respectivement en sortie de chacune des directions de réflexion et transmission du séparateur de faisceau (BS),
   iv. des troisième et quatrième délais D3 et D4 de type ligne à retard placés en sortie de chacune des faces de sortie du premier moyen Mu de séparation spatiale de photons à degré de liberté da et db différents, activables par le client C et destinés à introduire un délai temporel sur le faisceau les traversant,
   v. des cinquième et sixième délais D5 et D6 de type ligne à retard placés en sortie de chacune des faces de sortie du second moyen Md de séparation spatiale de photons à degré de liberté da et db différents, activables par le client C et destinés à introduire un délai temporel sur le faisceau les traversant,
de telle sorte que le séparateur de faisceau BS du client C soit placé en sortie du générateur de bits quantiques solides du serveur quantique S et que les troisième, quatrième, cinquième et sixième délais, D3, D4, D5 et D6 du client C soient respectivement placés en entrée des premier et deuxième détecteurs de photons Ddau, DDbu et des troisième et quatrième détecteurs de photons DDad, DDbd du serveur quantique S.

A titre d'exemples, selon le degré de liberté des photons choisi pour mettre en oeuvre le procédé de génération sécurisée d'un état quantique Ef, les premier et second moyens Mu et Md de séparation spatiale de photons à degrés de liberté da et db différents peuvent être choisis parmi un démultiplexeur, un séparateur de faisceau à polarisation, un dispositif d'interférence de type Mach-Zehnder asymétrique, ou une mesure du temps d'arrivée des photons sur les détecteurs de photon unique Ddau, DDbu, DDad, DDbd du serveur quantique S.

Selon une deuxième variante du premier mode de réalisation, le procédé de génération sécurisée d'un état quantique Ef est caractérisé par les éléments ci-dessous :
- le masquage de l'étape d/ n'est pas réalisé ;
- l'étape e/ de mesure des degrés de liberté d1 et d2 des photons dans l'état quantique Ec est réalisée par le client (C) ;
- l'étape f/ est produite suite à la mesure des degrés de liberté d1 et d2 des photons dans l'état quantique Ec du fait de l'intrication entre les degrés de liberté d1 et d2 des photons et les bits quantiques du serveur quantique S les émettant, ladite intrication induisant un nouvel état quantique Ef des bits quantiques.

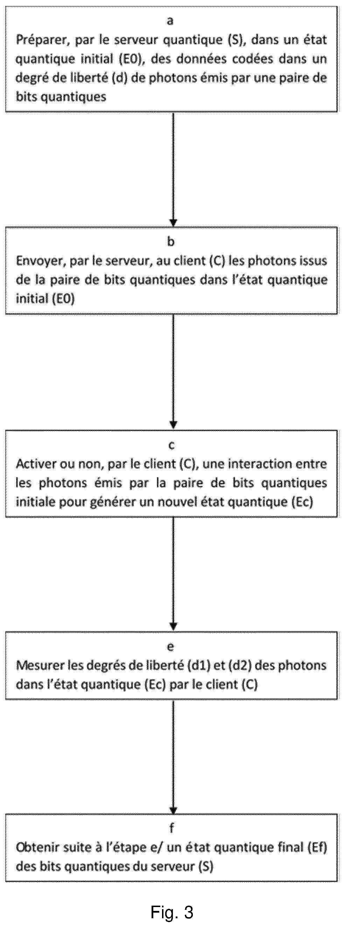

Cette deuxième variante du premier mode de réalisation est illustrée schématiquement sur la figure 3 annexée.

Dans cette deuxième variante du premier mode de réalisation, où l'étape e/ de mesure dans le procédé de génération sécurisée d'un état quantique Ef est réalisée par le client C, plusieurs configurations d'activation sont possibles. Cependant, dans cette deuxième variante, il n'y a pas de transmission des mesures du client C vers le serveur quantique S, donc il n'y a pas de phase de masquage.

Aussi, la demande a également pour objet un dispositif pour la mise en oeuvre du procédé de génération sécurisée d'un état quantique Ef, dans lequel le serveur quantique S comprend un générateur de bits quantiques solides émettant des photons via l'application d'un champ électromagnétique, et le client C comprend :
- un séparateur de faisceau BS étant destiné à recevoir deux photons émis par la paire de bits quantiques dans l'état quantique E0,
- des premier et deuxième délais D1 et D2 de type ligne à retard placés en entrée de chacune des faces d'entrée du séparateur de faisceau BS activables par le client C et destinés à introduire un délai temporel sur le faisceau les traversant,
- des premier et second moyens Mu et Md de séparation spatiale de photons à degrés de liberté da et db différents placés respectivement en sortie de chacune des directions de réflexion et transmission du séparateur de faisceau BS,
- des troisième et quatrième délais D3 et D4 de type ligne à retard placés en sortie de chacune des faces de sortie du premier moyen Mu de séparation spatiale de photons à degré de liberté da et db différents, préférentiellement mis à zéro par le client C,
- des cinquième et sixième délais D5 et D6 de type ligne à retard placés en sortie de chacune des faces de sortie du second moyen Md de séparation spatiale de photons à degré de liberté da et db différents, préférentiellement mis à zéro par le client C,
- deux premier et deuxième détecteurs de photons uniques DDau, DDbu, destinés à délivrer des premiers signaux de mesure Dau, Dbu, et deux troisième et quatrième détecteurs de photons uniques DDad, DDbd, destinés à délivrer des seconds signaux de mesure Dad, Dbd, de telle sorte que le séparateur de faisceau BS du client C soit placé en sortie du générateur de bits quantiques solides du serveur quantique S et que les troisième, quatrième, cinquième et sixième délais, D3, D4, D5 et D6 du client C soient respectivement placés en entrée des premier et deuxième détecteurs de photons Ddau, DDbu et des troisième et quatrième détecteurs de photons DDad, DDbd du client C.

De la même manière, selon le degré de liberté des photons choisi pour mettre en oeuvre cette deuxième variante du mode de réalisation illustré à la figure 1, les premier et second moyens Mu et Md de séparation spatiale de photons à degrés de liberté da et db différents peuvent être choisis parmi un démultiplexeur, un séparateur de faisceau à polarisation, un dispositif d'interférence de type Mach-Zehnder asymétrique, ou une mesure du temps d'arrivée des photons sur les détecteurs de photon unique Ddau ou DDbu d'une part, ou DDad, DDbd d'autre part, du serveur quantique S.

Plusieurs exemples de premier et second moyens Mu et Md de séparation spatiale de photons à degrés de liberté da et db différents sont donnés juste après. Ces exemples seront illustrés dans les figures 5a à 5e annexées.

Dans le cas où le degré de liberté d choisi est la fréquence des photons, de manière illustrée sur la figure 5a, un démultiplexeur peut être utilisé pour séparer spatialement deux photons ayant une fréquence différente. Par exemple, des composants passifs tels qu'un prisme, ou un réseau de diffraction, ou encore un WDM (« Wavelength Division Multiplexing » en anglais) peuvent disperser les deux fréquences différentes dans deux directions spatiales différentes.

Dans le cas où le degré de liberté d choisi est la polarisation des photons, de manière illustrée sur la figure 5b, un séparateur de faisceau à polarisation peut être utilisé pour réfléchir dans une direction une première polarisation, par exemple horizontale, et transmettre dans une seconde direction une seconde polarisation, par exemple verticale.

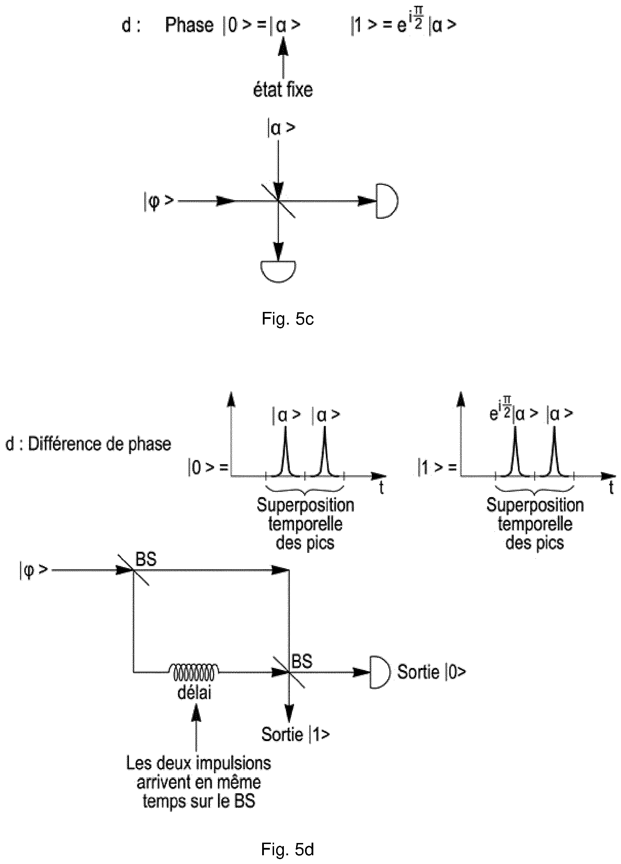

Dans le cas où le degré de liberté d choisi est la phase, de manière illustrée sur la figure 5c, un séparateur de faisceau peut faire interagir un photon avec un autre photon d'état quantique donné |α>, avec, en sortie de ce séparateur de faisceau deux détecteurs DDau et DDbu, ou DDad et DDbd, détectant respectivement soit un photon à l'état |α>, soit un photon à l'état e^iπ |α>.

Dans le cas où le bit quantique solide ne génère pas un photon mais une succession temporelle de deux impulsions de photons, et qu'alors le degré de liberté d choisi est la différence de phase de la succession des deux impulsions, de manière illustrée sur la figure 5d, une interférence réalisée avec un interféromètre de type Mach-Zehnder asymétrique peut être réalisée. Cette succession temporelle de deux impulsions de photons est un exemple particulier d'un état quantique résultant de la superposition de plusieurs états de base, ici au nombre de deux. Cette interférence peut être réalisée à l'aide d'un interféromètre de type Mach-Zehnder asymétrique, comprenant un séparateur de faisceau d'entrée et un séparateur de faisceau de sortie et incluant dans un de ses bras un élément introduisant un délai temporel, et par conséquent un déphasage entre les deux impulsions successives. Lorsque le train des deux impulsions entre dans l'interféromètre, l'élément introduisant un délai temporel entre les deux impulsions est configuré de manière à ce que les deux impulsions soient superposées temporellement et arrivent simultanément dans le séparateur de faisceau de sortie de l'interféromètre. Les états possibles résultant de cette interférence peuvent être soit un état superposant un état prédéfini |α> avec ce même état prédéfini |α> mais retardé dans le temps, soit un état superposant le même état prédéfini |α> avec un état déphasé de π par rapport à cet état |α> et retardé temporellement par rapport à l'état |α> d'un déphasage π.

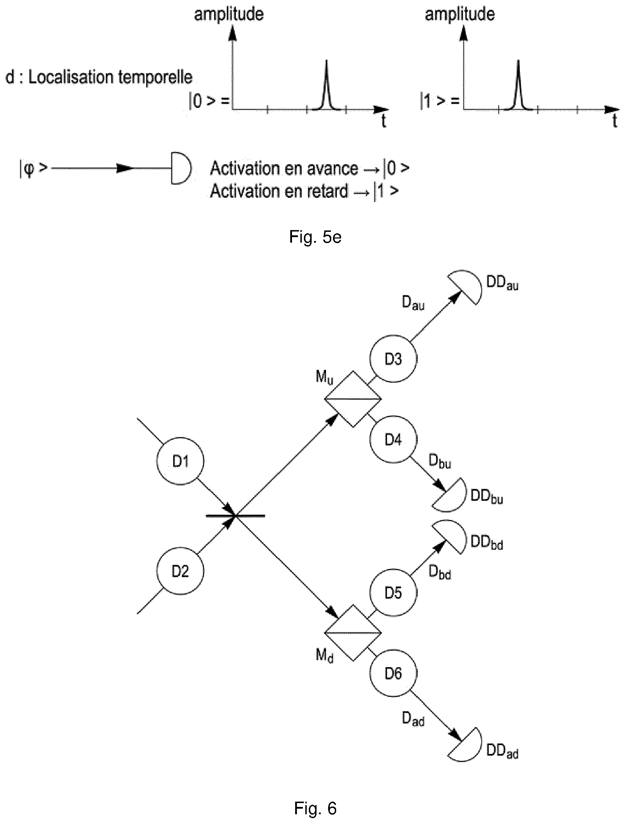

Dans le cas où le degré de liberté d choisi est la localisation temporelle des photons, de manière illustrée sur la figure 5e, une mesure du temps d'arrivée des photons sur deux détecteurs de photon unique DDu d'une part, ou DDd d'autre part, peut être réalisée. Plus précisément, le détecteur de photon unique DDu remplace les deux détecteurs de photon unique DDau et DDbu, d'une part, et le détecteur de photon unique DDd remplace les deux détecteurs de photon unique DDad et DDbd.

### EXEMPLES

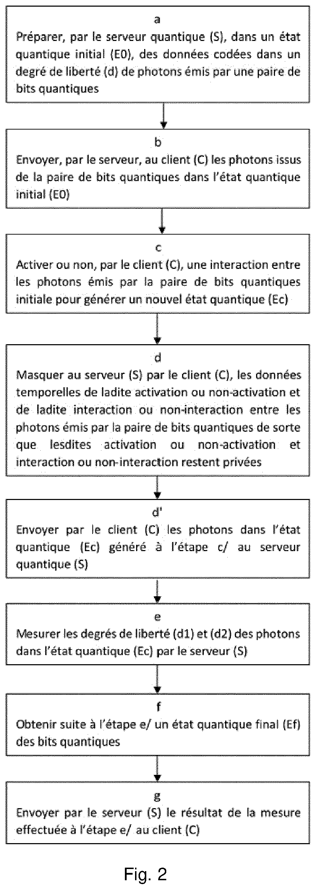

EXEMPLE 1 : Cet exemple est une première réalisation de la première variante décrite plus haut, illustrée à la figure 2, où l'étape e/ de mesure dans le procédé de génération sécurisée d'un état quantique Ef est réalisée par le serveur quantique S.

Dans cette première réalisation, l'étape c/ comprend les sous-étapes suivantes ;
o le dispositif client C active uniquement le composant D1 ;
o deux photons incidents provenant de la paire de bits quantiques arrivent sur le séparateur de faisceau BS de manière non-concomitante et se propagent jusqu'aux troisième, quatrième, cinquième ou sixième délais D3, D4, D5 et D6, donnant un état quantique résultant Ec ;
o le client C envoie au serveur quantique S les photons qui se sont propagés jusqu'aux troisième, quatrième, cinquième ou sixième délais D3, D4, D5 et D6 ; de sorte que le serveur quantique S mesure, dans un ordre d'arrivée aléatoire, à l'aide des premier, deuxième, troisième et quatrième détecteurs de photons DDau, DDbu, DDad, DDbd, les degrés de liberté d1 et d2 des photons dans l'état quantique Ec ; et que le serveur quantique S partage l'état quantique final mesuré Ef de la paire de bits quantiques avec le client C.

EXEMPLE 2 : Cet exemple est une deuxième réalisation de la première variante décrite plus haut, illustrée à la figure 2, où l'étape e/ de mesure dans le procédé de génération sécurisée d'un état quantique Ef est réalisée par le serveur quantique S.

Dans cette deuxième réalisation l'étape c/ comprend les sous-étapes suivantes :
- le dispositif client C active uniquement le composant D2 ;
- deux photons incidents provenant de la paire de bits quantiques arrivent sur le séparateur de faisceau BS de manière non-concomitante et se propagent dans le dispositif D, donnant un état quantique résultant Ec ;
- le client C envoie au serveur quantique S les photons qui se sont propagés jusqu'aux troisième, quatrième, cinquième ou sixième délais D3, D4, D5 et D6 ; de sorte que le serveur quantique S mesure, dans un ordre d'arrivée aléatoire, à l'aide des premier, deuxième, troisième et quatrième détecteurs de photons DDau, DDbu, DDad, DDbd, les degrés de liberté d1 et d2 des photons dans l'état quantique Ec ; et que le serveur quantique S partage l'état quantique final mesuré Ef de la paire de bits quantiques avec le client C.

EXEMPLE 3 : Cet exemple est une troisième réalisation de la première variante illustrée à la figure 2, où l'étape e/ de mesure dans le procédé de génération sécurisée d'un état quantique Ef est réalisée par le serveur quantique S. Il repose sur l'utilisation d'un séparateur de faisceau pour faire interagir entre elles deux particules distinctes, en particulier, entre des photons qui ont précédemment été intriqués avec des bits quantiques, produisant ainsi un effet Hong-Ou-Mandel. De cette interaction peut être créée de l'intrication par transfert d'intrication (« entanglement swapping » en anglais) vers les bits quantiques dans les conditions ci-après :
- les deux photons incidents sur le séparateur de faisceau BS sont détectés à la même sortie du séparateur de faisceau ;
- les deux photons ont des degrés de liberté d1 et d2 différents.

Dans cette troisième réalisation l'étape c/ comprend les sous-étapes suivantes :
- le client C active uniquement les troisième et cinquième délais D3 et D5 ;
- deux photons incidents provenant de la paire de bits quantiques arrivent sur le séparateur de faisceau BS de manière concomitante et se propagent dans le dispositif D, ledit séparateur de faisceau BS créant de l'intrication entre les deux photons incidents avec une probabilité de 50% et lesdits troisième et cinquième délais D3 et D5 ajoutant un délai temporel aux photons les traversant, donnant ainsi un état quantique résultant Ec où l'intrication entre les deux bits quantiques ayant émis les photons est masquée ;
- le client C envoie au serveur quantique S les photons qui se sont propagés jusqu'aux troisième, quatrième, cinquième ou sixième délais D3, D4, D5 et D6 arrivant dans le serveur quantique S dans l'état quantique Ec ; de sorte que le serveur quantique S mesure, dans un ordre d'arrivée non-prédéfini, à l'aide des premier, deuxième, troisième et quatrième détecteurs de photons DDau, DDbu, DDad, DDbd, les degrés de liberté d1 et d2 des photons dans l'état quantique Ec ; et que le serveur quantique S partage l'état quantique final mesuré Ef de la paire de bits quantiques avec le client C.

EXEMPLE 4 : Cet exemple est une quatrième réalisation de la première variante illustrée à la figure 2, où l'étape e/ de mesure dans le procédé de génération sécurisée d'un état quantique Ef est réalisée par le serveur quantique S. Il repose sur l'utilisation d'un séparateur de faisceau pour faire interagir entre elles deux particules distinctes, en particulier, entre des photons qui ont précédemment été intriqués avec des bits quantiques, produisant ainsi un effet Hong-Ou-Mandel. De cette interaction peut être créée de l'intrication par transfert d'intrication (« entanglement swapping » en anglais) vers les bits quantiques dans les conditions ci-après :
- les deux photons incidents sur le séparateur de faisceau BS sont détectés à la même sortie du séparateur de faisceau ;
- les deux photons ont des degrés de liberté d1 et d2 différents.

Dans cette quatrième réalisation l'étape c/ comprend les sous-étapes suivantes :
- le client C active uniquement les quatrième et sixième délais D4 et D6 ;
- deux photons incidents provenant de la paire de bits quantiques arrivent sur le séparateur de faisceau BS de manière concomitante et se propagent dans le dispositif D, ledit séparateur de faisceau BS créant de l'intrication entre les deux photons incidents avec une probabilité de 50% et lesdits quatrième et sixième D4 et D6 ajoutant un délai temporel aux photons les traversant, donnant ainsi un état quantique résultant Ec où la quantité d'intrication des deux photons est masquée ;
- le client C envoie au serveur quantique S les photons qui se sont propagés dans le dispositif jusqu'aux troisième, quatrième, cinquième ou sixième délais D3, D4, D5 et D6 arrivant dans le serveur quantique S dans l'état Ec ; de sorte que le serveur quantique S mesure, dans un ordre d'arrivée non-prédéfini, à l'aide des détecteurs de photons DDau, DDbu, DDad, DDbd, les degrés de liberté d1 et d2 des photons dans l'état quantique Ec ; et que le serveur quantique S partage l'état quantique final mesuré Ef de la paire de bits quantiques avec le client C.

EXEMPLE 5 : Cet exemple est une première réalisation de la deuxième variante décrite plus haut et illustrée à la figure 3, où l'étape e/ de mesure dans procédé de génération sécurisée d'un état quantique Ef est réalisée par le client C.

Dans cette première réalisation l'étape c/ comprend les sous-étapes suivantes ;
- le dispositif client C active uniquement le composant D1 ;
- deux photons incidents provenant de la paire de bits quantiques arrivent sur le séparateur de faisceau BS de manière non-concomitante et se propagent jusqu'aux troisième, quatrième, cinquième ou sixième délais D3, D4, D5 et D6,préférentiellement mis à zéro, donnant un état quantique résultant Ec ;
- le client C mesure, dans un ordre d'arrivée aléatoire, à l'aide des premier, deuxième, troisième et quatrième détecteurs de photons DDau, DDbu, DDad, DDbd, les degrés de liberté d1 et d2 des photons dans l'état quantique Ec ; où le nouvel état quantique Ef des bits quantiques du serveur quantique S est ainsi obtenu du fait de l'intrication des degrés de libertés des photons avec les bits quantiques du serveur quantique S et de la mesure des degrés de libertés des photons par le client C.

EXEMPLE 6 : Cet exemple est une deuxième réalisation de la deuxième variante décrite plus haut et illustrée à la figure 3, où l'étape e/ de mesure dans procédé de génération sécurisée d'un état quantique Ef est réalisée par le client C.

Dans cette deuxième réalisation l'étape c/ comprend les sous-étapes suivantes :
- le dispositif client C active uniquement le composant D2 ;
- deux photons incidents provenant de la paire de bits quantiques arrivent sur le séparateur de faisceau BS de manière non-concomitante et se propagent jusqu'aux troisième, quatrième, cinquième ou sixième délais D3, D4, D5 et D6, préférentiellement mis à zéro, donnant un état quantique résultant Ec ;
- le client C mesure, dans un ordre d'arrivée aléatoire, à l'aide des premier, deuxième, troisième et quatrième détecteurs de photons DDau, DDbu, DDad, DDbd, les degrés de liberté d1 et d2 des photons dans l'état quantique Ec ; où le nouvel état quantique Ef des bits quantiques du serveur quantique S est ainsi obtenu du fait de l'intrication des degrés de liberté des photons avec les bits quantiques du serveur quantique S et de la mesure des degrés de libertés des photons par le client C.

## Revendications

1. Procédé de génération sécurisée d'un état quantique (Ef) par un serveur quantique (S) délégué par un client (C), ledit procédé de génération comprenant les étapes suivantes :
a/ préparer, par le serveur quantique (S), dans un état quantique initial (E0), des données codées dans des degrés de liberté (d1) et (d2) de photons émis par une paire de bits quantiques, où le degré de liberté (d1) ou (d2) de chaque photon émis est intriqué avec le bit quantique émettant le photon ;
b/ envoyer, par le serveur quantique (S), au client (C) les photons issus de la paire de bits quantiques dans l'état quantique initial (E0) ;
c/ activer ou non, par le client (C), une interaction entre les photons émis par la paire de bits quantiques initiale pour générer un nouvel état quantique (Ec) ;
d/ masquer au serveur quantique (S) ou non, par le client (C), les données temporelles de ladite activation ou non-activation et de ladite interaction ou non-interaction entre les photons émis par la paire de bits quantiques de sorte que lesdites activation ou non-activation et interaction ou non-interaction restent privées ;
e/ mesurer les degrés de liberté (d1) et (d2) des photons dans l'état quantique (Ec) généré à l'étape c/ ;
f/ obtenir suite à l'étape e/ un état quantique final (Ef) des bits quantiques.

2. Procédé de génération sécurisée d'un état quantique (Ef) selon la revendication 1, dans lequel :
- les degré de liberté (d1) et (d2) des photons émis sont choisis parmi la polarisation, la fréquence, la localisation temporelle, la différence de phase ;
- l'interaction à l'étape c/ entre les photons émis par la paire de bits quantiques consiste en une interférence à deux photons se produisant à l'entrée d'un séparateur de faisceau (BS) ; et
- le masquage des données temporelles de ladite activation et de ladite interaction entre les photons émis par la paire de bits quantiques est réalisé par l'introduction à l'étape d/ de délais, choisis par le client (C), entre les chemins suivis par chacun des photons issus de la paire de bits quantiques dans l'état quantique initial (E0).

3. Procédé de génération sécurisée d'un état quantique (Ef) selon les revendications 1 ou 2 dans lequel :
- le masquage de l'étape d/ est réalisé ;
- une étape intermédiaire d'/ entre les étapes d/ et e/ est réalisée, ladite étape d'/ consistant à envoyer par le client (C) les photons dans l'état quantique (Ec) généré à l'étape c/ au serveur quantique (S) ;
- l'étape e/ de mesure des degrés de liberté (d1) et (d2) des photons dans l'état quantique (Ec) est réalisée par le serveur quantique (S) ;
- une étape supplémentaire g/ est réalisée, ladite étape g/ consistant à envoyer par le serveur quantique (S) le résultat de la mesure effectuée à l'étape e/ au client (C).

4. Procédé de génération sécurisée d'un état quantique (Ef) selon les revendications 1 ou 2 dans lequel :
- le masquage de l'étape d/ n'est pas réalisé ;
- l'étape e/ de mesure des degrés de liberté (d1) et (d2) des photons dans l'état quantique (Ec) est réalisée par le client (C) ;
- l'étape f/ est produite suite à la mesure des degrés de liberté (d1) et (d2) des photons dans l'état quantique (Ec) du fait de l'intrication entre les degrés de liberté (d1) et (d2) des photons et les bits quantiques du serveur (S) les émettant, ladite intrication induisant un nouvel état quantique (Ef) des bits quantiques.

5. Système configuré pour la mise en oeuvre du procédé de génération sécurisée d'un état quantique (Ef) selon la revendication 3, dans lequel :
- le serveur quantique (S) comprend :
a. un générateur de bits quantiques solides,
b. deux premier et deuxième détecteurs de photons uniques (DDau), (DDbu), destinés à délivrer des premiers signaux de mesure (Dau), (Dbu), et deux troisième et quatrième détecteurs de photons uniques (DDad), (DDbd), destinés à délivrer des seconds signaux de mesure (Dad), (Dbd) ;
- le client (C) comprend :
a. un séparateur de faisceau (BS) étant destiné à recevoir deux photons émis par la paire de bits quantiques dans l'état quantique (E0),
b. des premier et deuxième délais (D1) et (D2) de type ligne à retard placés en entrée de chacune des faces d'entrée du séparateur de faisceau (BS) activables par le client (C) et destinés à introduire un délai temporel sur le faisceau les traversant,
c. des premier et second moyens (Mu) et (Md) de séparation spatiale de photons à degrés de liberté (da) et (db) différents placés respectivement en sortie de chacune des directions de réflexion et transmission du séparateur de faisceau (BS),
d. des troisième et quatrième délais (D3) et (D4) de type ligne à retard placés en sortie de chacune des faces de sortie du premier moyen (Mu) de séparation spatiale de photons à degré de liberté (da) et (db) différents, activables par le client (C) et destinés à introduire un délai temporel sur le faisceau les traversant
e. des cinquième et sixième délais (D5) et (D6) de type ligne à retard placés en sortie de chacune des faces de sortie du second moyen (Md) de séparation spatiale de photons à degré de liberté (da) et (db) différents, activables par le client (C) et destinés à introduire un délai temporel sur le faisceau les traversant, tels que le séparateur de faisceau (BS) du client (C) soit placé en sortie du générateur de bits quantiques solides du serveur quantique (S) et que les troisième, quatrième, cinquième et sixième délais, (D3), (D4), (D5) et (D6) du client (C) soient respectivement placés en entrée des premier et deuxième détecteurs de photons (DDau), (DDbu) et des troisième et quatrième détecteurs de photons (DDad), (DDbd) du serveur quantique (S).

6. Système selon la revendication 5, dans lequel les premier et second moyens (Mu) et (Md) de séparation spatiale de photons à degrés de liberté (da) et (db) différents sont choisis parmi un démultiplexeur, un séparateur de faisceau à polarisation, un dispositif d'interférence de type Mach Zehnder asymétrique, ou une mesure du temps d'arrivée des photons.

7. Procédé de génération sécurisée d'un état quantique (Ef) selon la revendication 3 et utilisant le système selon la revendication 5, dans laquelle l'étape c/ comprend les sous-étapes suivantes :
- le dispositif client (C) active uniquement le composant (D1) ;
- deux photons incidents provenant de la paire de bits quantiques arrivent sur le séparateur de faisceau (BS) de manière non-concomitante et se propagent jusqu'aux troisième, quatrième, cinquième ou sixième délais (D3), (D4), (D5) et (D6), donnant un état quantique résultant (Ec) ;
- le client (C) envoie au serveur quantique (S) les photons qui se sont propagés jusqu'aux troisième, quatrième, cinquième ou sixième délais (D3), (D4), (D5) et (D6) ;
de sorte que le serveur quantique (S) mesure, dans un ordre d'arrivée aléatoire, à l'aide des premier, deuxième, troisième et quatrième détecteurs de photons (DDau), (DDbu), (DDdad), (DDbd), les degrés de liberté (d1) et (d2) des photons dans l'état quantique (Ec) ; et que le serveur quantique (S) partage l'état quantique final mesuré (Ef) de la paire de bits quantiques avec le client (C).

8. Procédé de génération sécurisée d'un état quantique (Ef) selon la revendication 3 et utilisant le système selon la revendication 5 dans lequel l'étape c/ comprend les sous-étapes suivantes :
- le dispositif client (C) active uniquement le composant (D2) ;
- deux photons incidents provenant de la paire de bits quantiques arrivent sur le séparateur de faisceau (BS) de manière non-concomitante et se propagent dans le dispositif (D), donnant un état quantique résultant (Ec) ;
- le client (C) envoie au serveur quantique (S) les photons qui se sont propagés jusqu'aux troisième, quatrième, cinquième ou sixième délais (D3), (D4), (D5) et (D6) ;
de sorte que le serveur quantique (S) mesure, dans un ordre d'arrivée aléatoire, à l'aide des premier, deuxième, troisième et quatrième détecteurs de photons (DDau), (DDbu), (DDad), (DDbd), les degrés de liberté (d1) et (d2) des photons dans l'état quantique (Ec) ; et que le serveur quantique (S) partage l'état quantique final mesuré (Ef) de la paire de bits quantiques avec le client (C).

9. Procédé de génération sécurisée d'un état quantique (Ef) selon la revendication 3 et utilisant le système selon la revendication 5 dans laquelle l'étape c/ comprend les sous-étapes suivantes :
- le client (C) active uniquement les troisième et cinquième délais (D3) et (D5) ;
- deux photons incidents provenant de la paire de bits quantiques arrivent sur le séparateur de faisceau (BS) de manière concomitante et se propagent dans le dispositif (D), ledit séparateur de faisceau (BS) créant de l'intrication entre les deux photons incidents avec une probabilité de 50% et lesdits troisième et cinquième délais (D3) et (D5) ajoutant un délai temporel aux photons les traversant, donnant ainsi un état quantique résultant (Ec) où la quantité d'intrication des deux photons est masquée ;
- le client (C) envoie au serveur quantique (S) les photons qui se sont propagés dans le dispositif selon la revendication 3 jusqu'aux troisième, quatrième, cinquième ou sixième délais (D3), (D4), (D5) et (D6) arrivant dans le serveur quantique (S) dans l'état quantique (Ec) ;
de sorte que le serveur quantique (S) mesure, dans un ordre d'arrivée non-prédéfini, à l'aide des premier, deuxième, troisième et quatrième détecteurs de photons (DDau), (DDbu), (DDad), (DDbd), les degrés de liberté (d1) et (d2) des photons dans l'état quantique (Ec) ; et que le serveur quantique (S) partage le résultat de la mesure précédemment effectuée du degré de liberté des photons détectés émis par la paire de bits quantiques avec le client (C).

10. Procédé de génération sécurisée d'un état quantique (Ef) selon la revendication 3 et utilisant le système selon la revendication 5, dans laquelle l'étape c/ comprend les sous-étapes suivantes :
- le client (C) active uniquement les quatrième et sixième délais (D4) et (D6) ;
- deux photons incidents provenant de la paire de bits quantiques arrivent sur le séparateur de faisceau (BS) de manière concomitante et se propagent dans le dispositif (D), ledit séparateur de faisceau (BS) créant de l'intrication entre les deux photons incidents avec une probabilité de 50% et lesdits quatrième et sixième (D4) et (D6) ajoutant un délai temporel aux photons les traversant, donnant ainsi un état quantique résultant (Ec) où la quantité d'intrication des deux photons est masquée ;
- le client (C) envoie au serveur quantique (S) les photons qui se sont propagés dans le dispositif jusqu'aux troisième, quatrième, cinquième ou sixième délais (D3), (D4), (D5) et (D6) arrivant dans le serveur quantique (S) dans l'état (Ec) ;
de sorte que le serveur quantique (S) mesure, dans un ordre d'arrivée non-prédéfini, à l'aide des détecteurs de photons (DDau), (DDbu), (DDad), (DDbd), les degrés de liberté (d1) et (d2) des photons dans l'état quantique (Ec) ; et que le serveur quantique (S) partage le résultat de la mesure précédemment effectuée du degré de liberté des photons détectés émis par la paire de bits quantiques avec le client (C).

11. Système configuré pour la mise en oeuvre du procédé de génération sécurisée d'un état quantique (Ef) selon la revendication 4, dans lequel le serveur quantique (S) comprend un générateur de bits quantiques solides, et le client (C) comprend :
- un séparateur de faisceau (BS) étant destiné à recevoir deux photons émis par la paire de bits quantiques dans l'état quantique (E0),
- des premier et deuxième délais (D1) et (D2) de type ligne à retard placés en entrée de chacune des faces d'entrée du séparateur de faisceau (BS) activables par le client (C) et destinés à introduire un délai temporel sur le faisceau les traversant,
- des premier et second moyens (Mu) et (Md) de séparation spatiale de photons à degrés de liberté (da) et (db) différents placés respectivement en sortie de chacune des directions de réflexion et transmission du séparateur de faisceau (BS),
- des troisième et quatrième délais (D3) et (D4) de type ligne à retard placés en sortie de chacune des faces de sortie du premier moyen (Mu) de séparation spatiale de photons à degré de liberté (da) et (db) différents, activables par le client (C),
- des cinquième et sixième délais (D5) et (D6) de type ligne à retard placés en sortie de chacune des faces de sortie du second moyen (Md) de séparation spatiale de photons à degré de liberté (da) et (db) différents, activables par le client (C),
- deux premier et deuxième détecteurs de photons uniques (DDau), (DDbu), destinés à délivrer des premiers signaux de mesure (Dau), (Dbu), et deux troisième et quatrième détecteurs de photons uniques (DDad), (DDbd), destinés à délivrer des seconds signaux de mesure (Dad), (Dbd), tels que le séparateur de faisceau (BS) du client (C) soit placé en sortie du générateur de bits quantiques solides du serveur quantique (S) et que les troisième, quatrième, cinquième et sixième délais, (D3), (D4), (D5) et (D6) du client (C) soient respectivement placés en entrée des premier et deuxième détecteurs de photons (Ddau), (DDbu) et des troisième et quatrième détecteurs de photons (Ddad), (Ddbd) du client (C).

12. Système selon la revendication 11, dans lequel les premier et second moyens (Mu) et (Md) de séparation spatiale de photons à degrés de liberté (da) et (db) différents sont choisis parmi un démultiplexeur, un séparateur de faisceau à polarisation, un dispositif d'interférence de type Mach-Zehnder asymétrique, ou une mesure du temps d'arrivée des photons.

13. Procédé de génération sécurisée d'un état quantique (Ef) selon la revendication 4 et utilisant le système selon la revendication 11, dans laquelle l'étape c/ comprend les sous-étapes suivantes :
- le dispositif client (C) active uniquement le composant (D1) ;
- deux photons incidents provenant de la paire de bits quantiques arrivent sur le séparateur de faisceau (BS) de manière non-concomitante et se propagent jusqu'aux troisième, quatrième, cinquième ou sixième délais (D3), (D4), (D5) et (D6), donnant un état quantique résultant (Ec) ;
- le client (C) mesure, dans un ordre d'arrivée aléatoire, à l'aide des premier, deuxième, troisième et quatrième détecteurs de photons (DDau), (DDbu), (DDad), (DDbd), les degrés de liberté (d1) et (d2) des photons dans l'état quantique (Ec) ;
où le nouvel état quantique (Ef) des bits quantiques du serveur quantique (S) est ainsi obtenu du fait de l'intrication des degrés de liberté des photons avec les bits quantiques du serveur quantique (S) et de la mesure des degrés de libertés des photons par le client (C).

14. Procédé de génération sécurisée d'un état quantique (Ef) selon la revendication 4 et utilisant le système selon la revendication 11, dans laquelle l'étape c/ comprend les sous-étapes suivantes :
- le dispositif client (C) active uniquement le composant (D2) ;
- deux photons incidents provenant de la paire de bits quantiques arrivent sur le séparateur de faisceau (BS) de manière non-concomitante et se propagent jusqu'aux troisième, quatrième, cinquième ou sixième délais (D3), (D4), (D5) et (D6), donnant un état quantique résultant (Ec) ;
- le client (C) mesure, dans un ordre d'arrivée aléatoire, à l'aide des premier, deuxième, troisième et quatrième détecteurs de photons (DDau), (DDbu), (DDad), (DDbd), les degrés de liberté (d1) et (d2) des photons dans l'état quantique (Ec) ;
où le nouvel état quantique (Ef) des bits quantiques du serveur quantique (S) est ainsi obtenu du fait de l'intrication des degrés de libertés des photons avec les bits quantiques du serveur quantique (S) et de la mesure des degrés de libertés des photons par le client (C).

15. Système configuré pour la mise en oeuvre du procédé de génération sécurisée d'un état quantique (Ef) selon les revendications 3 ou 4, dans lequel le dispositif client (C) est inclus dans un boîtier scellé.

## Patentansprüche

1. Verfahren zum gesicherten Erzeugen eines Quantenzustands (Ef) durch einen Quantenserver (S), der durch einen Client (C) delegiert wird, das Erzeugungsverfahren umfassend die folgenden Schritte:
a/ Generieren, durch den Quantenserver (S), in einem anfänglichen Quantenzustand (E0), von codierten Daten in den Freiheitsgraden (d1) und (d2) von Photonen, die durch ein Paar von Quantenbits emittiert werden, wobei der Freiheitsgrad (d1) oder (d2) von jedem emittierten Photon mit dem Quantenbit verschränkt ist, das das Photon emittiert;
b/ Senden, durch den Quantenserver (S), an den Client (C), der Photonen, die von dem Paar von Quantenbits in dem anfänglichen Quantenzustand (E0) ausgegeben werden;
c/ Aktivieren oder Nichtaktivieren, durch den Client (C), einer Interaktion zwischen den Photonen, die durch das Paar von anfänglichen Quantenbits zum Erzeugen eines neuen Quantenzustands (Ec) emittiert werden;
d/ Maskieren oder Nichtmaskieren, gegenüber dem Quantenserver (S), durch den Client (C), von vorläufigen Daten der Aktivierung oder der Nichtaktivierung und der Interaktion oder der Nichtinteraktion zwischen den Photonen, die durch das Paar von Quantenbits emittiert werden, sodass die Aktivierung oder die Nichtaktivierung und die Interaktion oder die Nichtinteraktion privat bleiben;
e/ Messen der Freiheitsgrade (d1) und (d2) von Photonen in dem Quantenzustand (Ec), der in Schritt c/ erzeugt wird;
f/ Erhalten, im Anschluss an Schritt e/, eines endgültigen Quantenzustands (Ef) der Quantenbits.

2. Verfahren zum gesicherten Erzeugen eines Quantenzustands (Ef) nach Anspruch 1, wobei:
- die Freiheitsgrade (d1) und (d2) der emittierten Photonen aus der Polarisation, der Frequenz, der vorläufigen Lokalisierung, dem Phasenunterschied ausgewählt sind;
- die Interaktion in Schritt c/ zwischen den Photonen, die durch das Paar von Quantenbits emittiert werden, aus einer Interferenz von zwei Photonen besteht, die bei dem Eingang eines Strahlteilers (BS) auftritt; und
- die Maskierung der vorläufigen Daten der Aktivierung und der Interaktion zwischen den Photonen, die durch das Paar von Quantenbits emittiert werden, durch die Einleitung in Schritt d/ von Verzögerungen, durch den Client (C) ausgewählt, zwischen den Pfaden durchgeführt wird, die durch jedes der Photonen verfolgt werden, die von dem Paar von Quantenbits in dem anfänglichen Quantenzustand (E0) ausgegeben werden.

3. Verfahren zum gesicherten Erzeugen eines Quantenzustands (Ef) nach Anspruch 1 oder 2, wobei:
- die Maskierung von Schritt d/ durchgeführt wird;
- ein Zwischenschritt d'/ zwischen den Schritten d/ und e/ durchgeführt wird, wobei der Schritt d'/ aus dem Senden, durch den Client (C), von Photonen in dem Quantenzustand (Ec), der in Schritt c/ erzeugt wird, an den Quantenserver (S) besteht;
- der Schritt e/ des Messens der Freiheitsgrade (d1) und (d2) von Photonen in dem Quantenzustand (Ec) durch den Quantenserver (S) durchgeführt wird;
- ein zusätzlicher Schritt g/ durchgeführt wird, wobei der Schritt g/ aus dem Senden, durch den Quantenserver (S), des Ergebnisses der Messung, die in Schritt e/ ausgeführt wird, an den Client (C) besteht.

4. Verfahren zum gesicherten Erzeugen eines Quantenzustands (Ef) nach Anspruch 1 oder 2, wobei:
- die Maskierung des Schritts d/ nicht durchgeführt wird;
- der Schritt e/ der Messung der Freiheitsgrade (d1) und (d2) von Photonen in dem Quantenzustand (Ec) durch den Client (C) durchgeführt wird;
- der Schritt f/ im Anschluss an die Messung der Freiheitsgrade (d1) und (d2) von Photonen in dem Quantenzustand (Ec) aufgrund der Verschränkung zwischen den Freiheitsgraden (d1) und (d2) von Photonen und den Quantenbits des Servers (S) auftritt, der sie emittiert, wobei die Verschränkung einen neuen Quantenzustand (Ef) der Quantenbits hervorruft.

5. System, das zum Implementieren des Verfahrens zum gesicherten Erzeugen eines Quantenzustands (Ef) nach Anspruch 3 konfiguriert ist, wobei:
- der Quantenserver (S) umfasst:
a. einen Erzeuger von festen Quantenbits,
b. zwei erste und zweite Einzelphotonendetektoren (DDau), (DDbu), die dafür bestimmt sind, erste Messsignale (Dau), (Dbu) auszustellen, und zwei dritte und vierte Einzelphotonendetektoren (DDad), (DDbd), die dafür bestimmt sind, zweite Messsignale (Dad), (Dbd) auszustellen;
- der Client (C) umfasst:
a. einen Strahlteiler (BS), der dafür bestimmt ist, zwei Photonen zu empfangen, die durch das Paar von Quantenbits in dem Quantenzustand (E0) emittiert werden,
b. eine erste und eine zweite Verzögerung (D1) und (D2) einer Speichertankart, die bei dem Eingang von jeder der Eingangsflächen des Strahlteilers (BS) platziert sind, die durch den Client (C) aktivierbar und dafür bestimmt sind, eine vorläufige Verzögerung auf den durch sie hindurchgehenden Strahl einzuleiten,
c. ein erstes und ein zweites Mittel (Mu) und (Md) zur räumlichen Trennung von Photonen mit unterschiedlichen Freiheitsgraden (da) und (db), die jeweils bei dem Ausgang von jeder der Reflexions- und Übertragungsrichtungen des Strahlteilers (BS) platziert sind,
d. eine dritte und eine vierte Verzögerung (D3) und (D4) der Speichertankart, die bei dem Ausgang von jeder der Ausgangsflächen des ersten Mittels (Mu) zur räumlichen Trennung von Photonen mit unterschiedlichen Freiheitsgraden (da) und (db) platziert sind, die durch den Client (C) aktivierbar und dafür bestimmt sind, eine vorläufige Verzögerung auf den durch sie hindurchgehenden Strahl einzuleiten
e. eine fünfte und eine sechste Verzögerung (D5) und (D6) der Speichertankart, die bei dem Ausgang von jeder der Ausgangsflächen des zweiten Mittels (Md) der räumlichen Trennung von Photonen mit unterschiedlichen Freiheitsgraden (da) und (db) platziert sind, die durch den Client (C) aktivierbar und dafür bestimmt sind, eine vorläufige Verzögerung auf den durch sie hindurchgehenden Strahl einzuleiten, wie zum Beispiel der Strahlteiler (BS) des Client (C) entweder bei dem Ausgang des Erzeugers von festen Quantenbits des Quantenservers (S) platziert wird oder die dritte, die vierte, die fünfte und die sechste Verzögerung (D3), (D4), (D5) und (D6) des Client (C) jeweils bei dem Eingang des ersten und des zweiten Photonendetektors (DDau), (DDbu) und des dritten und des vierten Photonendetektors (DDad), (DDbd) des Quantenservers (S) platziert werden.

6. System nach Anspruch 5, wobei das erste und das zweite Mittel (Mu) und (Md) zur räumlichen Trennung von Photonen mit unterschiedlichen Freiheitsgraden (da) und (db) aus einem Demultiplexer, einem Polarisationsstrahlteiler, einer asymmetrischen Interferenzvorrichtung einer Mach-Zehnder-Art oder einer Messung der Ankunftszeit der Photonen ausgewählt sind.

7. Verfahren zum gesicherten Erzeugen eines Quantenzustands (Ef) nach Anspruch 3 und Verwendung des Systems nach Anspruch 5, wobei der Schritt c/ die folgenden Unterschritte umfasst
- die Clientvorrichtung (C) aktiviert einzig die Komponente (D1);
- zwei einfallende Photonen, die von dem Paar von Quantenbits stammen, kommen bei dem Strahlteiler (BS) auf nicht gleichzeitige Weise an und breiten sich bis zu der dritten, der vierten, der fünften oder der sechsten Verzögerung (D3), D4), (D5) und (D6) aus, wobei sie einen resultierenden Quantenzustand (Ec) ergeben;
- der Client (C) sendet die Photonen, die sich bis zu der dritten, der vierten, der fünften oder der sechsten Verzögerung (D3), D4), (D5) und (D6) ausbreiten, an den Quantenserver (S);
sodass der Quantenserver (S) in einer zufälligen Ankunftsreihenfolge, mittels des ersten, des zweiten, des dritten und des vierten Photonendetektors (DDau), (DDbu), (Dddad), (DDbd) die Freiheitsgrade (d1) und (d2) von Photonen in dem Quantenzustand (Ec) misst; und der Quantenserver (S) den endgültig gemessenen Quantenzustand (Ef) des Paars von Quantenbits mit dem Client (C) teilt.

8. Verfahren zum gesicherten Erzeugen eines Quantenzustands (Ef) nach Anspruch 3 und Verwendung des Systems nach Anspruch 5, wobei der Schritt c/ die folgenden Unterschritte umfasst:
- die Clientvorrichtung (C) aktiviert einzig die Komponente (D2);
- zwei einfallende Photonen, die von dem Paar von Quantenbits stammen, kommen bei dem Strahlteiler (BS) auf nicht gleichzeitige Weise an und breiten sich in der Vorrichtung aus, wobei sie einen resultierenden Quantenzustand (Ec) ergeben;
- der Client (C) sendet die Photonen, die sich bis zu der dritten, der vierten, der fünften oder der sechsten Verzögerung (D3), D4), (D5) und (D6) ausbreiten, an den Quantenserver (S);
sodass der Quantenserver (S) in einer zufälligen Ankunftsreihenfolge, mittels des ersten, des zweiten, des dritten und des vierten Photonendetektors (DDau), (DDbu), (DDad), (DDbd) die Freiheitsgrade (d1) und (d2) von Photonen in dem Quantenzustand (Ec) misst; und der Quantenserver (S) den endgültig gemessenen Quantenzustand (Ef) des Paars von Quantenbits mit dem Client (C) teilt.

9. Verfahren zum gesicherten Erzeugen eines Quantenzustands (Ef) nach Anspruch 3 und Verwendung des Systems nach Anspruch 5, wobei der Schritt c/ die folgenden Unterschritte umfasst:
- der Client (C) aktiviert einzig die dritte und die fünfte Verzögerung (D3) und (D5);
- zwei einfallende Photonen, die von dem Paar von Quantenbits stammen, kommen bei dem Strahlteiler (BS) auf gleichzeitige Weise an und breiten sich in der Vorrichtung (D) aus, wobei der Strahlteiler (BS) die Verschränkung zwischen den zwei einfallenden Photonen mit einer Wahrscheinlichkeit von 50 % schafft und die dritte und die fünfte Verzögerung (D3) und (D5) den durch sie hindurchgehenden Photonen eine vorläufige Verzögerung anhängen, wobei sie so einen resultierenden Quantenzustand (Ec) ergeben, in dem der Umfang der Verschränkung der zwei Photonen maskiert ist;
- der Client (C) sendet die Photonen, die sich in der Vorrichtung nach Anspruch 3 bis zu der dritten, der vierten, der fünften oder der sechsten Verzögerung (D3), (D4), (D5) und (D6) ausbreiten, die in dem Quantenserver (S) in dem Quantenzustand (Ec) ankommen, an den Quantenserver (S);
sodass der Quantenserver (S) in einer nicht vordefinierten Ankunftsreihenfolge, mittels des ersten, des zweiten, des dritten und des vierten Photonendetektors (DDau), (DDbu), (DDad), (DDbd) die Freiheitsgrade (d1) und (d2) von Photonen in dem Quantenzustand (Ec) misst; und der Quantenserver (S) die vorher ausgeführte Messung des Freiheitsgrads der erfassten Photonen, die durch das Paar von Quantenbits emittiert werden, mit dem Client (C) teilt.

10. Verfahren zum gesicherten Erzeugen eines Quantenzustands (Ef) nach Anspruch 3 und Verwendung des Systems nach Anspruch 5, wobei der Schritt c/ die folgenden Unterschritte umfasst:
- der Client (C) aktiviert die vierte und die sechste Verzögerung (D4) und (D6);
- zwei einfallende Photonen, die von dem Paar von Quantenbits stammen, kommen bei dem Strahlteiler (BS) auf gleichzeitige Weise an und breiten sich in der Vorrichtung (D) aus, wobei der Strahlteiler (BS) die Verschränkung zwischen den zwei einfallenden Photonen mit einer Wahrscheinlichkeit von 50 % schafft und die vierte und die sechste Verzögerung (D4) und (D6) den durch sie hindurchgehenden Photonen eine vorläufige Verzögerung anhängen, wobei sie so einen resultierenden Quantenzustand (Ec) ergeben, in dem der Umfang der Verschränkung der zwei Photonen maskiert ist;
- der Client (C) sendet die Photonen, die sich bis zu der dritten, der vierten, der fünften oder der sechsten Verzögerung (D3), D4), (D5) und (D6) ausbreiten, die in dem Quantenserver (S) in dem Zustand (Ec) ankommen, an den Quantenserver (S);
sodass der Quantenserver (S) in einer nicht vordefinierten Ankunftsreihenfolge, mittels der Photonendetektoren (DDau), (DDbu), (DDad), (DDbd), die Freiheitsgrade (d1) und (d2) von Photonen in dem Quantenzustand (Ec) misst; und der Quantenserver (S) die vorher ausgeführte Messung des Freiheitsgrads der erfassten Photonen, die durch das Paar von Quantenbits emittiert werden, mit dem Client (C) teilt.

11. System, das zum Implementieren des Verfahrens zum gesicherten Erzeugen eines Quantenzustands (Ef) nach Anspruch 4 konfiguriert ist, wobei der Quantenserver (S) einen Erzeuger von festen Quantenbits umfasst und der Client (C) umfasst:
- einen Strahlteiler (BS), der dafür bestimmt ist, zwei Photonen zu empfangen, die durch das Paar von Quantenbits in dem Quantenzustand (E0) emittiert werden,
- eine erste und eine zweite Verzögerung (D1) und (D2) der Speichertankart, die bei dem Eingang von jeder der Eingangsflächen des Strahlteilers (BS) platziert sind, die durch den Client (C) aktivierbar und dafür bestimmt sind, eine vorläufige Verzögerung auf den durch sie hindurchgehenden Strahl einzuleiten,
- ein erstes und ein zweites Mittel (Mu) und (Md) zur räumlichen Trennung von Photonen mit unterschiedlichen Freiheitsgraden (da) und (db), die jeweils bei dem Ausgang von jeder der Reflexions- und Übertragungsrichtungen des Strahlteilers (BS) platziert sind,
- eine dritte und eine vierte Verzögerung (D3) und (D4) der Speichertankart, die bei dem Ausgang von jeder der Ausgangsflächen des ersten Mittels (Mu) zur räumlichen Trennung von Photonen mit unterschiedlichen Freiheitsgraden (da) und (db) platziert sind, die durch den Client (C) aktivierbar sind,
- eine fünfte und eine sechste Verzögerung (D5) und (D6) der Speichertankart, die bei dem Ausgang von jeder der Ausgangsflächen des zweiten Mittels (Md) zur räumlichen Trennung von Photonen mit unterschiedlichen Freiheitsgraden (da) und (db) platziert sind, die durch den Client (C) aktivierbar sind,
- zwei erste und zweite Einzelphotonendetektoren (DDau), (DDbu), die dafür bestimmt sind, erste Messsignale (Dau), (Dbu) auszustellen, und zwei dritte und vierte Einzelphotonendetektoren (DDad), (DDbd), die dafür bestimmt sind, zweite Messsignale (Dad), (Dbd) auszustellen, wie zum Beispiel der Strahlteiler (BS) des Client (C) entweder bei dem Ausgang des Erzeugers von festen Quantenbits des Quantenservers (S) platziert wird oder die dritte, die vierte, die fünfte und die sechste Verzögerung (D3), (D4), (D5) und (D6) des Client (C) jeweils bei dem Eingang des ersten und des zweiten Photonendetektors (Ddau), (DDbu) und des dritten und des vierten Photonendetektors (Ddad), (Ddbd) des Client (C) platziert werden.

12. System nach Anspruch 11, wobei das erste und das zweite Mittel (Mu) und (Md) zur räumlichen Trennung von Photonen mit unterschiedlichen Freiheitsgraden (da) und (db) aus einem Demultiplexer, einem Polarisationsstrahlteiler, einer asymmetrischen Interferenzvorrichtung der Mach-Zehnder-Art oder einer Messung der Ankunftszeit der Photonen ausgewählt sind.

13. Verfahren zum gesicherten Erzeugen eines Quantenzustands (Ef) nach Anspruch 4 und Verwendung des Systems nach Anspruch 11, wobei der Schritt c/ die folgenden Unterschritte umfasst
- die Clientvorrichtung (C) aktiviert einzig die Komponente (D1);
- zwei einfallende Photonen, die von dem Paar von Quantenbits stammen, die bei dem Strahlteiler (BS) auf nicht gleichzeitige Weise ankommen und sich bis zu der dritten, der vierten, der fünften oder der sechsten Verzögerung (D3), (D4), (D5) und (D6) ausbreiten, wobei sie einen resultierenden Quantenzustand (Ec) ergeben;
- der Client (C) misst, in einer zufälligen Ankunftsreihenfolge, mittels des ersten, des zweiten, des dritten und des vierten Photonendetektors (DDau), (DDbu), (DDad), (DDbd) die Freiheitsgrade (d1) und (d2) von Photonen in dem Quantenzustand (Ec);
in dem der neue Quantenzustand (Ef) der Quantenbits des Quantenservers (S) aufgrund der Verschränkung der Freiheitsgrade von Photonen mit den Quantenbits des Quantenservers (S) und der Messung der Freiheitsgrade von Photonen durch den Client (C) erhalten wird.

14. Verfahren zum gesicherten Erzeugen eines Quantenzustands (Ef) nach Anspruch 4 und Verwendung des Systems nach Anspruch 11, wobei der Schritt c/ die folgenden Unterschritte umfasst:
- die Clientvorrichtung (C) aktiviert einzig die Komponente (D2);
- zwei einfallende Photonen, die von dem Paar von Quantenbits stammen, kommen bei dem Strahlteiler (BS) auf nicht gleichzeitige Weise an und breiten sich bis zu der dritten, der vierten, der fünften oder der sechsten Verzögerung (D3), D4), (D5) und (D6) aus, wobei sie einen resultierenden Quantenzustand (Ec) ergeben;
- der Client (C) misst, in einer zufälligen Ankunftsreihenfolge, mittels des ersten, des zweiten, des dritten und des vierten Photonendetektors (Ddau), (Ddbu), (Ddad), (Ddbd) die Freiheitsgrade (d1) und (d2) von Photonen in dem Quantenzustand (Ec);
in dem der neue Quantenzustand (Ef) der Quantenbits des Quantenservers (S) aufgrund der Verschränkung der Freiheitsgrade von Photonen mit den Quantenbits des Quantenservers (S) und der Messung der Freiheitsgrade von Photonen durch den Client (C) erhalten wird.

15. System, das zum Implementieren des Verfahrens zum gesicherten Erzeugen eines Quantenzustands (Ef) nach Anspruch 3 oder 4 konfiguriert ist, wobei die Clientvorrichtung (C) in einem abgedichteten Gehäuse eingeschlossen ist.

## Claims

1. A method for securely generating a quantum state (Ef) by a quantum server (S) delegated by a client (C), said generation method comprising the following steps:
a) preparing, by the quantum server (S), in an initial quantum state (E0), encoded data in degrees of freedom (d1) and (d2) of photons emitted by a pair of quantum bits, where the degree of freedom (d1) or (d2) of each emitted photon is entangled with the quantum bit emitting the photon;
b) sending, by the quantum server (S), to the client (C) the photons coming from the pair of quantum bits in the initial quantum state (E0);
c) activating or not, by the client (C), an interaction between the photons emitted by the initial quantum bit pair to generate a new quantum state (Ec);
d) masking to the quantum server (S) or not, by the client (C), the time data of said activation or non-activation and of said interaction or non-interaction between the photons emitted by the pair of quantum bits so that said activation or non-activation and interaction or non-interaction remain private;
e) measuring the degrees of freedom (d1) and (d2) of the photons in the quantum state (Ec) generated in step c);
f) obtaining, following step e), a final quantum state (Ef) of the quantum bits.

2. The method for securely generating a quantum state (Ef) according to claim 1, wherein:
- the degrees of freedom (d1) and (d2) of the emitted photons are chosen from the polarization, the frequency, the temporal location, the phase difference;
- the interaction in step c) between the photons emitted by the pair of quantum bits consists of a two-photon interference occurring at the input of a beam splitter (BS); and
- the masking of the time data of said activation and of said interaction between the photons emitted by the quantum pair of bits is carried out by the introduction in step d) of delays, chosen by the client (C), between the paths followed by each of the photons from the pair of quantum bits in the initial quantum state (E0).

3. The method for securely generating a quantum state (Ef) according to claims 1 or 2, wherein:
- the masking of step d) is carried out;
- an intermediate step d') between the steps d) and e) is carried out, said step d') consisting of sending by the client (C) the photons in the quantum state (Ec) generated in step c) to the quantum server (S);
- the step e) of measuring the degrees of freedom (d1) and (d2) of the photons in the quantum state (Ec) is carried out by the quantum server (S);
- an additional step g) is carried out, said step g) consisting of sending by the quantum server (S) the result of the measurement carried out in step e) to the client (C).

4. The method for securely generating a quantum state (Ef) according to claims 1 or 2, wherein:
- the masking of step d) is not performed;
- step e) of measuring the degrees of freedom (d1) and (d2) of the photons in the quantum state (Ec) is carried out by the client (C);
- step f) is produced following the measurement of the degrees of freedom (d1) and (d2) of the photons in the quantum state (Ec) due to the entanglement between the degrees of freedom (d1) and (d2) of the photons and the quantum bits of the server (S) emitting them, said entanglement inducing a new quantum state (Ef) of the quantum bits.

5. A system configured for implementing the method for securely generating a quantum state (Ef) according to claim 3, wherein:
- the quantum server (S) comprises:
a. a solid quantum bit generator,
b. two first and second single photon detectors (DDau), (DDbu), intended to deliver first measurement signals (Dau), (Dbu), and two third and fourth single photon detectors (DDad), (DDbd), intended to deliver second measurement signals (Dad), (Dbd);
- the client (C) comprises:
a. a beam splitter (BS) for receiving two photons emitted by the pair of quantum bits in the quantum state (E0),
b. first and second delays (D1) and (D2) of the delay line type placed at the input of each of the input faces of the beam splitter (BS) activable by the client (C) and intended to introduce a time delay on the beam passing through them,
c. first and second means (Mu) and (Md) for spatial separation of photons with degrees of freedom (da) and (db) which are different placed respectively at the output of each of the reflection and transmission directions of the beam splitter (BS),
d. third and fourth delays (D3) and (D4) of the delay line type placed at the output of each of the output faces of the first means (Mu) for spatial separation of photons with different degrees of freedom (da) and (db), activable by the client (C) and intended to introduce a time delay on the beam passing through them
e. fifth and sixth delays (D5) and (D6) of the delay line type placed at the output of each of the output faces of the second means (Md) for spatial separation of photons with different degrees of freedom (da) and (db), activable by the client (C) and intended to introduce a time delay on the beam passing through them, such that the beam splitter (BS) of the client (C) is placed at the output of the solid quantum bit generator of the quantum server (S) and that the third, fourth, fifth and sixth delays, (D3), (D4), (D5) and (D6) of the client (C) are respectively placed at the input of the first and second photon detectors (DDau), (DDbu) and the third and fourth photon detectors (DDad), (DDbd) of the quantum server (S).

6. The system according to claim 5, wherein the first and second means (Mu) and (Md) of spatial separation of photons with different degrees of freedom (da) and (db) are selected from a demultiplexer, a polarization beam splitter, an asymmetric Mach Zehnder type interference device, or a photon arrival time measurement.

7. The method for securely generating a quantum state (Ef) according to claim 3 and using the system according to claim 5, wherein step c) comprises the following sub-steps
- the client device (C) activates only the component (D1);
- two incident photons from the pair of quantum bits arrive on the beam splitter (BS) non-concurrently and propagate to the third, fourth, fifth or sixth delays (D3), (D4), (D5) and (D6), giving a resulting quantum state (Ec);
- the client (C) sends the quantum server (S) the photons which propagated to the third, fourth, fifth or sixth delays (D3), (D4), (D5) and (D6);
so that the quantum server (S) measures, in a random arrival order, using the first, second, third and fourth photon detectors (DDau), (DDbu), (DDdad), (DDbd), the degrees of freedom (d1) and (d2) of the photons in the quantum state (Ec); and so that the quantum server (S) shares the measured final quantum state (Ef) of the pair of quantum bits with the client (C).

8. The method for securely generating a quantum state (Ef) according to claim 3 and using the system according to claim 5, wherein step c) comprises the following sub-steps:
- the client device (C) activates only the component (D2);
- two incident photons from the pair of quantum bits arrive on the beam splitter (BS) non-concurrently and propagate in the device (D), giving a resulting quantum state (Ec);
- the client (C) sends the quantum server (S) the photons which propagated to the third, fourth, fifth or sixth delays (D3), (D4), (D5) and (D6);
so that the quantum server (S) measures, in a random arrival order, using the first, second, third and fourth photon detectors (DDau), (DDbu), (DDad), (DDbd), the degrees of freedom (d1) and (d2) of the photons in the quantum state (Ec); and so that the quantum server (S) shares the measured final quantum state (Ef) of the pair of quantum bits with the client (C).

9. The method for securely generating a quantum state (Ef) according to claim 3 and using the system according to claim 5, wherein step c) comprises the following sub-steps:
- the client (C) activates only the third and fifth delays (D3) and (D5);
- two incident photons from the pair of quantum bits arrive on the beam splitter (BS) concurrently and propagate in the device (D), said beam splitter (BS) creating entanglement between the two incident photons with a probability of 50% and said third and fifth delays (D3) and (D5) adding a time delay to the photons passing through them, thus giving a resulting quantum state (Ec) where the entanglement quantity of the two photons is masked,
- the client (C) sends the quantum server (S) the photons that propagated in the device according to claim 3 to the third, fourth, fifth or sixth delays (D3), (D4), (D5) and (D6) arriving in the quantum server (S) in the quantum state (Ec);
so that the quantum server (S) measures, in a non-predefined arrival order, using the first, second, third and fourth photon detectors (DDau), (DDbu), (DDad), (DDbd), the degrees of freedom (d1) and (d2) of the photons in the quantum state (Ec); and so that the quantum server (S) shares the result of the previously performed measurement of the degree of freedom of the detected photons emitted by the pair of quantum bits with the client (C).

10. The method for securely generating a quantum state (Ef) according to claim 3 and using the system according to claim 5, wherein step c) comprises the following sub-steps:
- the client (C) activates only the fourth and sixth delays (D4) and (D6);
- two incident photons from the pair of quantum bits arrive on the beam splitter (BS) concurrently and propagate in the device (D), said beam splitter (BS) creating entanglement between the two incident photons with a probability of 50% and said fourth and sixth delays (D4) and (D6) adding a time delay to the photons passing through them, thus giving a resulting quantum state (Ec) where the entanglement quantity of the two photons is masked;
- the client (C) sends the quantum server (S) the photons that propagated in the device to the third, fourth, fifth or sixth delays (D3), (D4), (D5) and (D6) arriving in the quantum server (S) in the state (Ec);
so that the quantum server (S) measures, in a non-predefined arrival order, using the photon detectors (DDau), (DDbu), (DDad), (DDbd), the degrees of freedom (d1) and (d2) of the photons in the quantum state (Ec); and so that the quantum server (S) shares the result of the previously performed measurement of the degree of freedom of the detected photons emitted by the pair of quantum bits with the client (C).

11. A system configured for implementing the method for securely generating a quantum state (Ef) according to claim 4, wherein the quantum server (S) comprises a solid quantum bit generator, and the client (C) comprises:
- a beam splitter (BS) for receiving two photons emitted by the pair of quantum bits in the quantum state (E0),
- first and second delays (D1) and (D2) of the delay line type placed at the input of each of the input faces of the beam splitter (BS) activable by the client (C) and for introducing a time delay on the beam passing through them,
- first and second means (Mu) and (Md) for spatial separation of photons with degrees of freedom (da) and (db) which are different placed respectively at the output of each of the reflection and transmission directions of the beam splitter (BS),
- third and fourth delays (D3) and (D4) of the delay line type placed at the output of each of the output faces of the first means (Mu) for spatial separation of photons with different degrees of freedom (da) and (db), activable by the client (C),
- fifth and sixth delays (D5) and (D6) of the delay line type placed at the output of each of the output faces of the second means (Md) for spatial separation of photons with different degrees of freedom (da) and (db), activable by the client (C),
- two first and second single photon detectors (DDau), (DDbu), intended to deliver first measurement signals (Dau), (Dbu), and two third and fourth single photon detectors (DDad), (DDbd), intended to deliver second measurement signals (Dad), (Dbd), such that the beam splitter (BS) of the client (C) is placed at the output of the solid quantum bit generator of the quantum server (S) and that the third, fourth, fifth and sixth delays, (D3), (D4), (D5) and (D6) of the client (C) are respectively placed at the input of the first and second photon detectors (Ddau), (DDbu) and third and fourth photon detectors (Ddad), (Ddbd) of the client (C).

12. The system according to claim 11, wherein the first and second means (Mu) and (Md) of spatial separation of photons with different degrees of freedom (da) and (db) are selected from a demultiplexer, a polarization beam splitter, an asymmetric Mach-Zehnder type interference device, or a photon arrival time measurement.

13. The method for securely generating a quantum state (Ef) according to claim 4 and using the system according to claim 11, wherein step c) comprises the following sub-steps
- the client device (C) activates only component (D1);
- two incident photons from the pair of quantum bits arrive on the beam splitter (BS) non-concurrently and propagate to the third, fourth, fifth or sixth delays (D3), (D4), (D5) and (D6), giving a resulting quantum state (Ec);
- the client (C) measures, in a random arrival order, using the first, second, third and fourth photon detectors (DDau), (DDbu), (DDad), (DDbd), the degrees of freedom (d1), and (d2) of the photons in the quantum state (Ec);
where the new quantum state (Ef) of the quantum bits of the quantum server (S) is thus obtained due to the entanglement of degrees of freedom of the photons with the quantum bits of the quantum server (S) and the measurement of degrees of freedoms of the photons by the client (C).

14. The method for securely generating a quantum state (Ef) according to claim 4 and using the system according to claim 11, wherein step c) comprises the following sub-steps:
- the client device (C) activates only component (D2);
- two incident photons from the pair of quantum bits arrive on the beam splitter (BS) non-concurrently and propagate to the third, fourth, fifth or sixth delays (D3), (D4), (D5) and (D6), giving a resulting quantum state (Ec);
- the client (C) measures, in a random arrival order, using the first, second, third and fourth photon detectors (DDau), (DDbu), (DDad), (DDbd), the degrees of freedom (d1) and (d2) of the photons in the quantum state (Ec);
where the new quantum state (Ef) of the quantum bits of the quantum server (S) is thus obtained due to the entanglement of degrees of freedoms of the photons with the quantum bits of the quantum server (S) and the measurement of degrees of freedoms of photons by the client (C).

15. A system configured for implementing the method for securely generating a quantum state (Ef) according to claims 3 or 4, wherein the client device (C) is included in a sealed housing.
